# EUROPÄISCHE PATENTANMELDUNG

(11) **EP 1 656 826 A1**
(43) Veröffentlichungstag der Anmeldung: **17.05.2006**
(21) Anmeldenummer: 05024624.8
(22) Anmeldetag: 11.11.2005
(51) Int. Cl.: A01D 45/26

(54) **Vorrichtung zum Abschneiden von niedrigwachsenden, insbesondere mit ihren unteren Blättern einen Untergrund berührenden, Kulturpflanzen**

(30) Priorität: 11.11.2004 DE 202004017498 U
(71) Anmelder: Menne, Birgit, 47625 Kevelaer (DE)
(72) Erfinder: Menne, Markus, 47625 Kevelaer (DE)
(74) Vertreter: DR. STARK & PARTNER

(57) **Zusammenfassung**

Die Erfindung betrifft eine Vorrichtung (11) zum Abschneiden von niedrigwachsenden, insbesondere mit ihren unteren Blättern einen Untergrund (35) berührenden Kulturpflanzen (9), wie z.B. Salaten, Endivien oder dergleichen, als Teil eines Erntevorgangs, wobei die Vorrichtung (11) zumindest eine Schneideinrichtung (24) mit wenigstens einem Schneidbereich umfasst, die für den Abschneidvorgang derart entlang der abzuschneidenden Kulturpflanzen (9) entlang einer Verfahrrichtung (1) bewegt wird, dass die Schneideinrichtung (24) mit ihrem Schneidbereich in Kontakt mit den durchzuschneidenden Stängel (18) der Kulturpflanze (9) kommt. Um eine Vorrichtung (11) der eingangs beschriebenen Art anzugeben, die ein problemloses Abschneiden von niedrig wachsenden, mit ihren unteren Blättern einen Untergrund (35) berührenden, Kulturpflanzen (9) ermöglicht, soll zumindest eine Hebeeinrichtung (12) zum Anheben der unteren, im Schneidbereich befindlichen Blätter der Kulturpflanze (9) von dem Untergrund (35) vorgesehen und der Schneideinrichtung (24) in Verfahrrichtung (1) gesehen zumindest bereichsweise vorgelagert sein. Die Erfindung betrifft auch eine Arbeitsmaschine mit zumindest einer erfindungsgemäßen Vorrichtung (11).

## Beschreibung

Die Erfindung betrifft eine Vorrichtung zum Abschneiden von niedrigwachsenden, insbesondere mit ihren unteren Blättern einen Untergrund berührenden Kulturpflanzen, wie z.B. Salaten, Endivien oder dergleichen, als Teil eines Erntevorgangs, wobei die Vorrichtung zumindest eine Schneideinrichtung mit wenigstens einem Schneidbereich umfasst, die für den Abschneidvorgang derart entlang der abzuschneidenden Kulturpflanzen entlang einer Verfahrrichtung bewegt wird, dass die Schneideinrichtung mit ihrem Schneidbereich in Kontakt mit den durchzuschneidenden Stängel der Kulturpflanze kommt.

Aus der Praxis sind Vorrichtungen bekannt, die mittels eines Antriebes über einen zu bearbeitenden Untergrund verfahren werden. Zum Abschneiden der Kulturpflanzen ist als Schneidvorrichtung ein horizontal zwischen zwei Umlenkpunkten umlaufendes und in einem geringen Abstand zum Untergrund verlaufendes Sägeblatt angeordnet. Die abgeschnittenen Kulturpflanzen werden dann von einem Band aufgenommen.

Als nachteilig erweist sich, dass insbesondere beim Abschneiden von Salatköpfen die unteren Blätter auf dem Untergrund aufliegen, so dass sich schon nach kurzer Zeit die Schneideinrichtungen zusetzen und diese dann mühsam gereinigt werden müssen, um befriedigende Abschneidergebnisse zu erzielen. Auch werden dabei die abzuschneidenden Kulturpflanzen beschädigt. Dieses Problem tritt insbesondere bei feuchten Bedingungen, z.B. bei Regen, auf, da dann der Boden matschig ist.

Aufgabe der Erfindung ist es, die vorgenannten Nachteile zu vermeiden und eine Vorrichtung der eingangs beschriebenen Art anzugeben, die ein problemloses Abschneiden von niedrig wachsenden, mit ihren unteren Blättern einen Untergrund berührenden, Kulturpflanzen ermöglicht.

Diese Aufgabe wird dadurch gelöst, dass zumindest eine Hebeeinrichtung zum Anheben der unteren, im Schneidbereich befindlichen Blätter der Kulturpflanze von dem Untergrund vorgesehen und der Schneideinrichtung in Verfahrrichtung gesehen zumindest bereichsweise vorgelagert ist. Bei den Kulturpflanzen kann es sich um sämtliche Salatarten wie z. B. Kopfsalat, Endivien, Lollorosso, Eisbergsalat auch Wirsing handeln. Durchaus denkbar sind auch Kohlrabi.

Kopfsalate werden beispielsweise in gleichmäßig beabstandeten Reihen und in einem definierten Abstand innerhalb der Reihe auf einem Feld gepflanzt. Mittels der erfindungsgemäßen Vorrichtung können die Kulturpflanzen bei jeden Wetterbedingungen problemlos abgeschnitten werden, da durch die Hebeeinrichtung die unteren, auf dem Untergrund aufliegenden Blätter angehoben werden. Daher kann die Schneideeinrichtung problemlos in den Freiraum zwischen dem Untergrund und den untersten Blättern eingreifen und den Stängel bzw. den Strunk der Kulturpflanze durchtrennen. Als Schneideinrichtung sind unterschiedliche Ausführungen möglich. Denkbar sind beispielsweise zwei nach Art einer Schere aufgebaute Scherenblätter, zwischen denen der Stängel abgeschnitten wird.

Zumindest eine Hebeeinrichtung kann als flächiges Gebilde ausgebildet sein, das einerseits einen im Wesentlichen horizontal ausgerichteten Bereich und andererseits einen demgegenüber angestellten Bereich aufweist, wobei der im Wesentlichen horizontal ausgerichtete Bereich eine zur Verfahrrichtung parallele, mit dem zu schneidenden Stängel in Kontakt befindliche Seitenkante aufweist und der angestellte Bereich in dem der Seitenkante gegenüberliegenden Teilbereich des im Wesentlichen horizontal ausgerichteten Bereichs angeordnet ist. Der im Wesentlichen horizontal ausgerichtete Bereich und/oder der angestellte Bereich können jeweils plan ausgebildet sein. Es ist aber auch durchaus möglich, dass der im Wesentlichen horizontal ausgerichtete Bereich und/oder der angestellte Bereich in sich gekrümmt, gewölbt oder gewinkelt ausgebildet ist. Die Hebeeinrichtung kann beispielsweise aus einem Blech vorzugsweise aus einem rostfreien Stahl oder aber auch aus Kunststoff gefertigt sein. Der im Wesentlichen horizontal ausgerichtete Bereich wird dabei vorzugsweise in geringerem Abstand über den Untergrund verfahren, so dass er unter die unteren Blätter greifen kann. Der sich daran anschließende angestellte Bereich dient dabei als seitliche Führung der angehobenen Blätter.

Der im Wesentlichen horizontal ausgerichtete Bereich und der angestellte Bereich können winklig zueinander angeordnet sein.

Bei einer anderen Ausführungsform können der im Wesentlichen horizontal ausgerichtete Bereich und der angestellte Bereich in der Gesamtheit eine in etwa gewölbte Kontur nach Art eines Schneepfluges aufweisen. Selbstverständlich ist es auch möglich, dass beispielsweise der im Wesentlichen horizontal ausgerichtete Bereich und der angestellte Bereich in dem in Verfahrrichtung vorderen Teil der Hebeeinrichtung winklig zueinander angeordnet sind und im hinteren Teil der Hebeeinrichtung eine gewölbte Kontur aufweist.

Die in Verfahrrichtung weisende vordere Kante des im Wesentlichen horizontalen Bereichs kann schräg ausgebildet sein. Dies erleichtert das Einführen der Hebeeinrichtung unter die Blätter der Kulturpflanze, da zunächst ein geringer Bereich eingeführt werden muss. Dieser vergrößert sich dann zunehmend aufgrund der schräg verlaufenden vorderen Kante des im Wesentlichen horizontal ausgerichteten Bereichs.

Dabei kann auch die vordere Kante des angestellten Bereichs schräg ausgebildet sein. Sofern auch der im Wesentlichen horizontale Bereich schräg ausgebildet ist, können der im Wesentlichen horizontale Bereich und der angestellte Bereich aus einem, in etwa dreieckigen Blechstück gefertigt sein, das dann entsprechend abgewinkelt wird.

Zumindest eine Abstandseinhalteeinrichtung kann zum Einhalten eines Abstandes zum Untergrund vorgesehen sein. Diese erfasst Unebenheiten des Untergrundes und hält so den erforderlichen Abstand zwischen der Vorrichtung und dem Untergrund ein.

Zumindest eine Abstandseinhalteeinrichtung kann als eine skiartig ausgebildete, im Bereich der vorderen Kante der Vorrichtung angeordnete, vorzugsweise mit der Seitenkante fluchtende, Kufe ausgebildet sein. Da die Kufe der Hebeeinrichtung vorgelagert ist, wird die Vorrichtung an die bei einem der nächsten bevorstehenden Schneidvorgänge dann bestehenden Verhältnissen des Untergrundes angepasst, so dass immer ein konstanter Abstand gewährleistet ist. Aufgrund der skiartigen Ausbildung wird verhindert, dass sich die Vorrichtung beim Verfahren in Verfahrrichtung beispielsweise in einen Hügel eingräbt.

Die Kufe kann aus einem federnden Material, wie z.B. einem Federstahl, bestehen. Andere geeignete Materialien sind selbstverständlich denkbar.

Als Schneideinrichtung kann ein horizontal ausgerichtetes rotierendes Schneide- oder Sägeblatt vorgesehen sein. Dieses ist so angeordnet, dass das Schneide- oder Sägeblatt mit seinem Schneidbereich zumindest in einem solchen Maße über die Seitenkante der Hebeeinrichtung hervorsteht, wie die maximal Dicke der abzuschneidenden Stängel beträgt.

Dabei können zwei Hebeeinrichtungen im Abstand zueinander angeordnet sein, wobei die im Wesentlichen horizontal ausgerichteten Bereiche beider Hebeeinrichtungen voneinander wegweisend angeordnet sind. Der Abstand der beiden Seitenkanten beider Hebeeinrichtungen entspricht dabei dem Abstand der Stängel zweier benachbarter Reihen, in denen die Kulturpflanzen auf dem Untergrund gepflanzt sind. In dem Zwischenraum zwischen den beiden Hebeeinrichtungen kann beispielsweise die Antriebseinrichtung vorgesehen sein, die die Schneideinrichtungen antreibt.

Die Schneideinrichtungen beider Hebeeinrichtungen können über einen gemeinsamen Antrieb antreibbar sein. Bei einer solchen Ausführungsform sind geeignete Übertragungsmechanismen z. B. Getriebe vorgesehen.

Die Erfindung betrifft auch eine Arbeitsmaschine zum Abschneiden von niedrigwachsenden, insbesondere mit ihren unteren Blättern einen Untergrund berührenden, Kulturpflanzen, wie z.B. Salaten, Endivien oder dergleichen, als Teil eines Erntevorgangs, wobei die Arbeitsmaschine zumindest eine Vorrichtung nach einem der vorhergehenden Ansprüchen umfasst.

Zumindest eine Vorrichtung kann über ein Schwenklager mit der Arbeitsmaschine verbunden sein. Dieses Schwenklager ermöglicht, dass die Vorrichtung zum Ausgleich von Unebenheiten des Untergrundes hoch und runter verlagerbar ist. Dabei bietet sich auch an, wenn das Schwenklager zumindest in gewissem Maße ein seitliches Spiel erlaubt. Die Vorrichtung kann dabei über eine Verbindungsstange mit dem Schwenklager verbunden sein.

Zumindest eine Vorrichtung kann über ein Kugelgelenk mit der Arbeitsmaschine verbunden sein. Eine solche Ausführungsform erlaubt auch ein uneingeschränktes seitliches Bewegen der Vorrichtung.

Damit die Arbeitsmaschine beispielsweise auch außerhalb des Einsatzes gemäß des Untergrundes verfahren werden kann, bietet sich an, wenn jede Vorrichtung hochziehbar ist. Auch bietet sich an, wenn zumindest ein Schwenklager und/oder ein Kugelgelenk in der Höhe bezogen auf den Untergrund verlagerbar ist, um Unebenheiten auszugleichen.

Im Folgenden wird ein in den Zeichnungen dargestelltes Ausführungsbeispiel der Erfindung erläutert. Es zeigen:
- Fig. 1: eine Draufsicht auf eine erfindungsgemäße Arbeitsmaschine,
- Fig. 2: einen Ausschnitt aus Fig. 1,
- Fig. 3: eine erfindungsgemäße Vorrichtung mit einer Hebeeinrichtung,
- Fig. 4: eine erfindungsgemäße Vorrichtung mit zwei Hebeeinrichtungen sowie einem gemeinsamen rotierenden Sägeblatt,
- Fig. 5: eine erfindungsgemäße Vorrichtung mit zwei Hebeeinrichtungen sowie zwei separaten Sägeblättern,
- Fig. 6: den Gegenstand nach Fig. 5 in der Frontansicht und
- Fig. 7: eine Rückansicht auf den Gegenstand nach Fig. 5.

In allen Figuren werden für gleiche bzw. gleichartige Bauteile übereinstimmende Bezugszeichen verwendet.

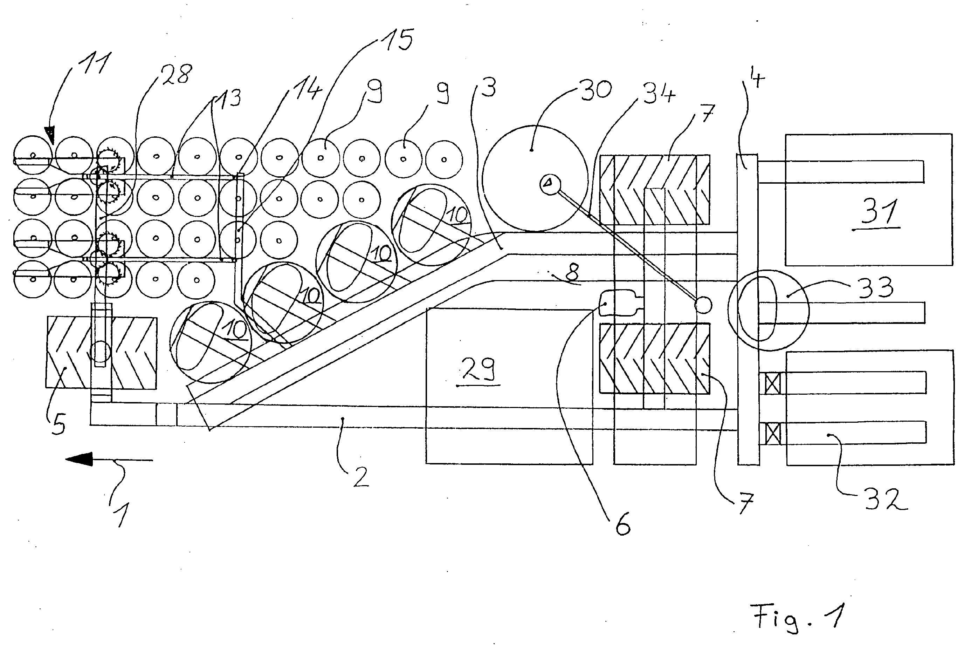

Die in Fig. 1 dargestellte Arbeitsmaschine weist eine Rahmenkonstruktion im wesentlich bestehend aus einem parallel zur Verfahrrichtung weisenden Träger 2, aus einem teilweise schräg zur Verfahrrichtung 1 weisenden Träger 3 sowie einem im hinteren Bereich der Arbeitsmaschine angeordneten, beide Träger verbindenden Querträger 4 auf. Vorderseitig weist die Arbeitsmaschine ein lenkbares, z.B. durch eine elektrische Lenkung lenkbares, Vorderrad 5 auf. Ferner weist die Arbeitsmaschine zwei über einen Antrieb 6, beispielsweise Elektroantrieb, antreibbare Hinterräder 7 auf.

Im Bereich des Trägers 3 läuft oberseitig ein umlaufendes Gliederband 8, mittels dessen die abgeernteten Kulturpflanzen 9 in den hinteren Bereich der Arbeitsmaschine transportiert werden können. An dem Träger 3 sind auf der in Verfahrrichtung 1 weisenden Seite vier Sitze 10, die vorzugsweise knapp über einen Untergrund angeordnet sind, damit die abgeschnittenen und noch auf dem Untergrund liegenden Kulturpflanzen 9 leicht aufgenommen werden können. Die Sitze 10 sind derart befestigt, dass die auf diesen Sitzen 10 sitzenden, nicht dargestellten Helfer mit dem Rücken zur Verfahrrichtung 1 sitzen. Die Beine der Helfer erstrecken sich unterhalb des Trägers 3.

Neben dem Vorderrad 5 weist die Arbeitsmaschine insgesamt zwei erfindungsgemäße Vorrichtungen 11 auf, wobei jede Vorrichtung 11 zwei Hebeeinrichtungen 12 umfasst. Jede Vorrichtung 11 weist eine Verbindungsstange 13 auf, die endseitig über ein Kugelgelenk 14 mit einer an dem Träger 3 befestigten Quertraverse 15 verbunden ist.

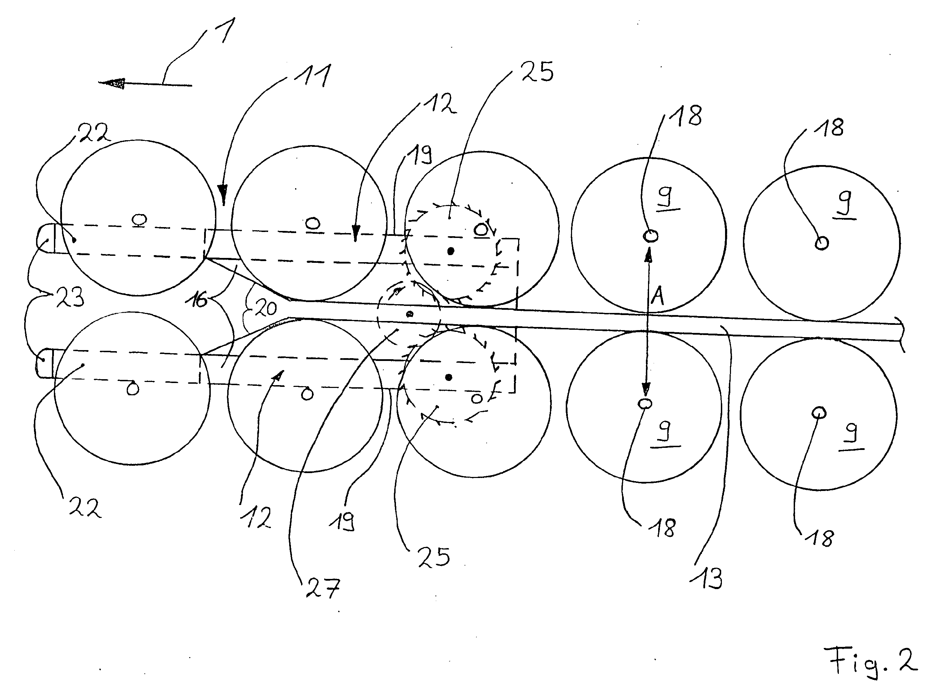

Wie beispielsweise Fig. 2 zu entnehmen ist, weist jede Hebeeinrichtung 12 einerseits einen im Wesentlichen horizontal ausgerichteten Bereich 16 und andererseits einen demgegenüber angestellten Bereich 17 auf. Der im Wesentlichen horizontal ausgerichtete Bereich 16 weist dabei eine zur Verfahrrichtung 1 parallele, mit einem zu schneidenden Stängel 18 der Kulturpflanzen 9 in Kontakt befindliche Seitenkante 19 auf. Der angestellte Bereich 17 ist in dem der Seitenkante 19 gegenüberliegenden Teilbereich des im Wesentlichen horizontal ausgerichteten Bereichs 16 angeordnet.

Deutlich erkennbar ist, dass die vordere Kante 20 des im Wesentlichen horizontalen Bereichs 16 schräg ausgebildet ist. Gleichermaßen ist die vordere Kante 21 des angestellten Bereichs 17 schräg nach oben laufend ausgebildet.

Die beiden Hebeeinrichtungen 12 einer Vorrichtung 11 sind so angeordnet, dass die im Wesentlichen horizontal ausgerichteten Bereiche 16 voneinander wegweisend angeordnet sind. Der Abstand der beiden Seitenkanten 19, entspricht dabei in etwa dem Abstand A der zu schneidenden Stängel 18 der Kulturpflanzen 9 zweier Reihen, so dass die Vorrichtung 11 mit den beiden Hebeeinrichtungen 12 mit Spiel zwischen zwei benachbarten Reihen hindurchgefahren werden können.

In Verlängerung zu der Seitenkante 19 ist im Bereich der vorderen Kante 20 der Hebeeinrichtung 12 eine als Kufe 22 ausgebildete Abstandseinhalteeinrichtung vorgesehen, die in etwa die Kontur eines Skis aufweist. Die vordere Spitze 23 ist insoweit zumindest leicht nach oben weisend ausgebildet. Die Kufe 22 ist beispielsweise aus einem federnden Material. Insgesamt ist die Kufe 22 nach unten zum Untergrund federnd ausgebildet.

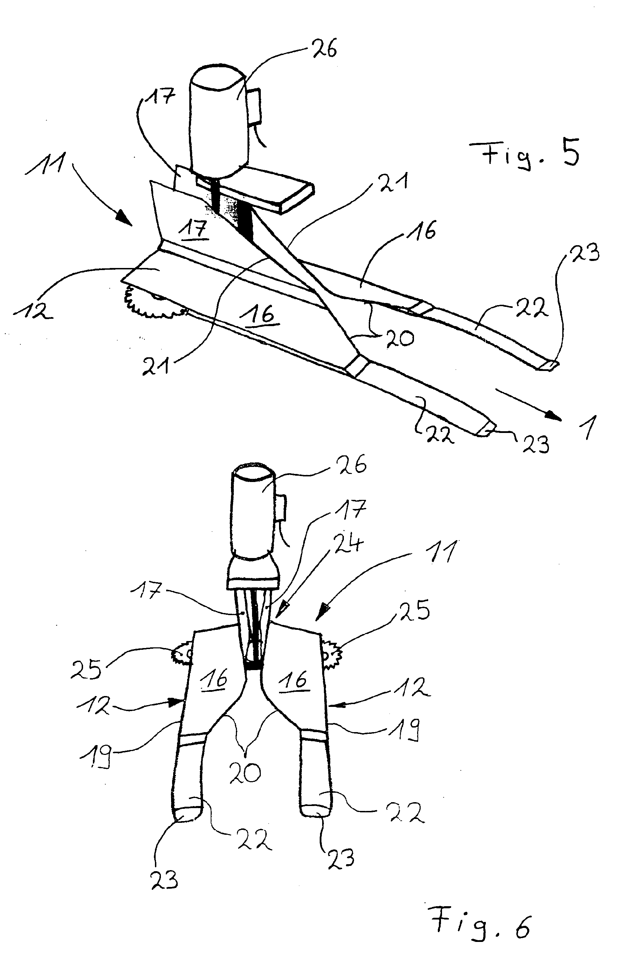

Wie beispielsweise Fig. 6 zu entnehmen ist, ist als Schneideinrichtung 24 ein rotierendes Schneide- oder Sägeblatt 25 vorgesehen. Dieses ist im Wesentlichen horizontal ausgerichtet und unterhalb des im Wesentlichen horizontalen Bereichs 16 angeordnet. Dabei steht der Schneidbereich über die Seitenkante 19 jeder Hebeeinrichtung 12 so weit über, dass mit diesem einen Schneide- oder Sägeblatt 25 ein Stängel 18 durchschnitten werden kann.

Bei der Ausführungsform nach Fig. 4 ist ein gemeinsames Schneid- oder Sägeblatt 25 vorgesehen, dessen Durchmesser infolgedessen größer als der Abstand der Seitenkanten 19 zweier Hebeeinrichtungen 12 einer Vorrichtung 11 ist.

In Fig. 6 ist eine Ausführungsform dargestellt, bei der jede Hebeeinrichtung 12 eine separate Schneideinrichtung 24 aufweist. Die Schneideinrichtungen 24 einer Vorrichtung 11 werden durch einen gemeinsamen Antrieb 26, der zwischen beiden Hebeeinrichtungen 12 vorgesehen ist, angetrieben. Die Umlenkung der Rotationsbewegung erfolgt über ein geeignetes, nicht näher dargestelltes Getriebe 27.

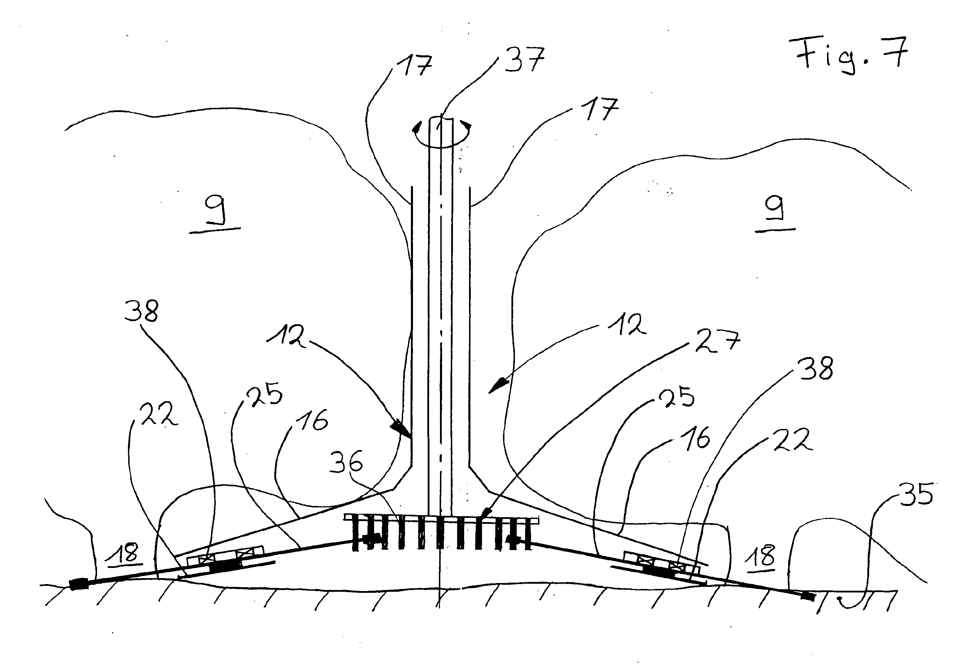

Wie aus Fig. 7 ersichtlich, sind die Hebeeinrichtungen 12 einer Vorrichtung 11 insbesondere im hinteren Bereich leicht gegeneinander angestellt, so dass die Vorrichtung 11 im Wesentlichen nur mit den Seitenkanten 19 im vorderen Bereich den Untergrund 35 berührt. Infolgedessen sind auch die Schneid- oder Sägeblätter 25 entsprechend schräg ausgerichtet. Hierdurch wird erreicht, dass das Getriebe 27 weiter vom Untergrund 35 beabstandet wird, um das Getriebe 27 vor Beschädigungen zu schützen.

Das Getriebe 27 besteht in dem dargestellten Ausführungsbeispiel aus einer Scheibe mit nach unten weisenden Stiften 36. Die Stifte 36 können, wie in Fig. 7 dargestellt, mit den Zähnen der Schneid- oder Sägeblätter 25 kämmen. Es sind aber auch alternative Gestaltungen möglich. Über eine vertikal ausgerichtete Welle 37 ist das Getriebe 27 mit dem Antrieb 26 verbunden. Jedes Schneid- oder Sägeblatt 25 ist über eine Lagerung 38 drehbar an der Vorrichtung 11 gelagert.

Wie den Figuren zu entnehmen ist, erstreckt sich bei den dargestellten Ausführungsbeispielen jede Kufe 22 unterhalb des im Wesentlichen horizontal ausgerichteten Bereichs 16 bis kurz vor den jeweiligen Schneidbereich. In Verfahrrichtung 1 gesehen hinter der Kufe 22 schließt sich dann das Schneid- oder Sägeblatt 25 an, das etwa mit der Unterkante der Kufe 22 fluchtet.

Damit die Vorrichtungen 11 beispielsweise zum Wenden der Arbeitsmaschine von dem Untergrund hinreichend beabstandet werden können, ist im Bereich des Vorderrades 5 ein Arm 28 vorgesehen, an dem eine nicht dargestellte Hebeeinrichtung, z.B. in Form eines mit der Vorrichtung 11 verbundenen Seils, zum Anheben der Vorrichtung 11 angreift.

Dem in Verfahrrichtung 1 linken Hinterrad 7 vorgelagert ist eine Abstellfläche 29 für leere Kisten. Auf der anderen Seite ist ein Behälter 30 zur Bevorratung von Duschwasser vorgesehen. Eine weitere Abstellfläche 31 für leere Kisten befindet sich hinter dem rechten Hinterrad 7. Auf der anderen Seite ist ein Hubgestell 32 vorgesehen, welches ebenfalls als Ablagefläche für eine Kiste dient, die wiederum auf einer Palette stehen kann. Zwischen der Abstellfläche 31 und dem Hubgestell 32 ist ein weiterer Arbeits-, insbesondere Sitzplatz 33 vorgesehen.

Beim Verfahren der Arbeitsmaschine in Verfahrrichtung 1 werden die Vorrichtungen 11 aufgrund der gelenkigen Lagerung durch die Stängel 18 der zu schneidenden Kulturpflanzen 9 selbst geführt. Wie Fig. 2 zu entnehmen ist, ist jede Seitenkante 19 einer Hebeeinrichtung 12 mit wenigstens drei Stängeln 18 in Kontakt, so dass insoweit eine hinreichende Führung jeder Vorrichtung 11 durch die Stängel 18 gewährleistet ist.

In einem ersten Schritt wird bei Verfahren der Arbeitsmaschine in Verfahrrichtung 1 jede Kufe 22 unter die untersten Blätter einer nächsten Kulturpflanze 9 geführt. Bei Weiterverfahren kommen die teilweise angehobenen Blätter in Kontakt mit dem im Wesentlichen horizontal ausgerichteten Bereich 16, wobei aufgrund der schräg verlaufenden vorderen Kante 20 und des sich daran anschließenden angestellten Bereichs 17 die unteren Blätter mehr und mehr angehoben werden, bis sie aus dem Schneidbereich entfernt sind.

Erst wenn die unteren Blätter hinreichend angehoben sind, kommt der Stängel 18 dieser Kulturpflanze 9 in den Schneidbereich der rotierenden Schneide- oder Sägeblätter 25 und wird durchgeschnitten. Bei weiterem Verfahren der Arbeitsmaschine bleiben die dann abgeschnittenen Kulturpflanzen 9 auf dem Untergrund liegen.

Insgesamt werden gleichzeitig vier Reihen an Kulturpflanzen 9 abgeschnitten, wobei die abgeschnittenen Kulturpflanzen 9 durch die auf den Sitzen 10 sitzenden Helfer vom Untergrund mit der linken Hand aufgegriffen und dann auf das Gliederband 8 aufgelegt werden.

Die Kufen 22 sind dabei federnd ausgebildet, so dass sich diese an die Verhältnisse des Untergrundes anpassen können. Vorzugsweise ist die Lenkung des Vorderrades 5 zumindest mit einer Vorrichtung 11 gekoppelt, damit die Arbeitsmaschine sich entsprechend der Stellung der geführten Vorrichtung 11 selbsttätig steuert.

Die auf dem Gliederband 8 in den hinteren Bereich der Arbeitsmaschine transportierten Kulturpflanzen 9 werden von dem Helfer, der auf dem hinteren Sitz 33 sitzt, in einer in dem Hubgestell 32 befindlichen Kiste bevorratet. Sofern gewünscht, kann die Kulturpflanze 9 vorher noch geputzt, beispielsweise von faulen Blättern befreit werden, oder aber gewaschen werden. Hierzu ist eine geeignete Leitung 34 zwischen dem Behälter 30 und dem Arbeits- oder Sitzplatz 33 vorgesehen.

Selbstverständlich ist es auch möglich, dass der hintere Teil des Gliederbandes 8 durch einen Duschtunnel geführt wird, in dem die auf dem Gliederband 8 transportierten Kulturpflanzen 9 besprüht werden.

Sofern die in dem Hubgestell 32 befindliche Kiste voll ist, wird das Hubgestell 32 abgesenkt, so dass die im Hubgestell 32 befindliche Kiste auf dem Untergrund abgesetzt wird. Dann wird das Hubgestell 32 wieder angehoben, eine leere Kiste aufgestellt und dies dann mit abgeschnittenen Kulturpflanzen 9 gefüllt.

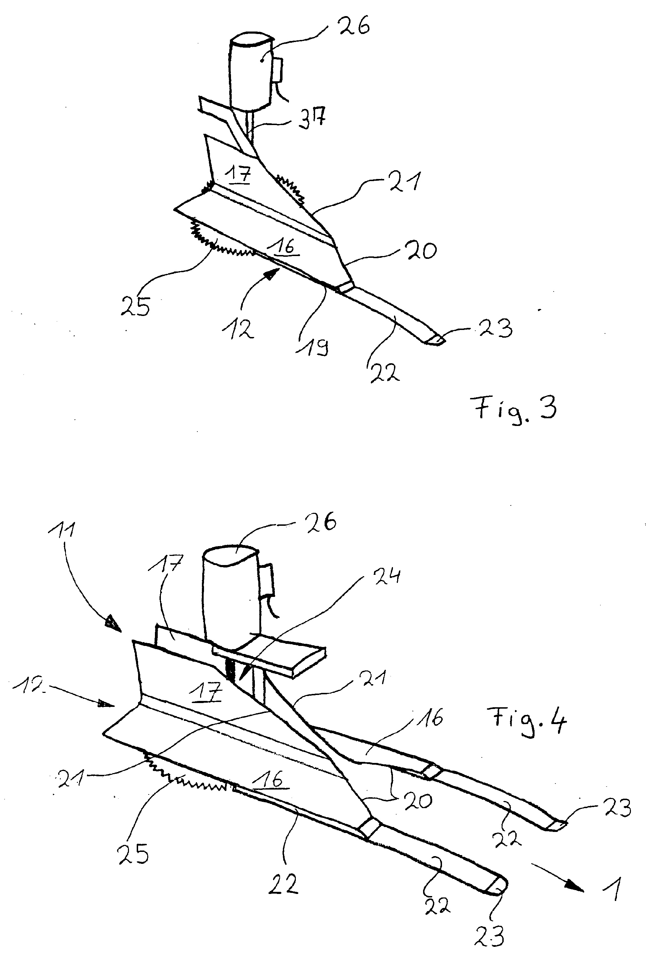

In Fig. 3 ist eine erfindungsgemäße Vorrichtung dargestellt, die lediglich eine Hebeeinrichtung 12 aufweist. Eine solche Ausgestaltung bietet sich dann an, wenn beispielsweise bei der in Fig. 1 dargestellten Ausführungsform noch eine zusätzliche fünfte Reihe an Kulturpflanzen 9 gleichzeitig abgeschnitten werden soll. Für diesen Fall müssten dann entweder von einem Helfer zwei Reihen bedient werden oder aber ein zusätzlicher Helfer im Bereich des Trägers 3 platziert werden.

## Patentansprüche

1. Vorrichtung (11) zum Abschneiden von niedrigwachsenden, insbesondere mit ihren unteren Blättern einen Untergrund (35) berührenden Kulturpflanzen (9), wie z.B. Salaten, Endivien oder dergleichen, als Teil eines Erntevorgangs, wobei die Vorrichtung (11) zumindest eine Schneideinrichtung (24) mit wenigstens einem Schneidbereich umfasst, die für den Abschneidvorgang derart entlang der abzuschneidenden Kulturpflanzen (9) entlang einer Verfahrrichtung (1) bewegt wird, dass die Schneideinrichtung (24) mit ihrem Schneidbereich in Kontakt mit den durchzuschneidenden Stängel (18) der Kulturpflanze (9) kommt, **dadurch gekennzeichnet, dass** zumindest eine Hebeeinrichtung (12) zum Anheben der unteren, im Schneidbereich befindlichen Blätter der Kulturpflanze (9) von dem Untergrund (35) vorgesehen und der Schneideinrichtung (24) in Verfahrrichtung (1) gesehen zumindest bereichsweise vorgelagert ist.

2. Vorrichtung (11) nach Anspruch 1, **dadurch gekennzeichnet, dass** zumindest eine Hebeeinrichtung (12) als flächiges Gebilde ausgebildet ist, das einerseits einen im Wesentlichen horizontal ausgerichteten Bereich (16) und andererseits einen demgegenüber angestellten Bereich (17) aufweist, wobei der im Wesentlichen horizontal ausgerichtete Bereich (16) eine zur Verfahrrichtung (1) parallele, mit dem zu schneidenden Stängel (18) in Kontakt befindliche Seitenkante (19) aufweist und der angestellte Bereich (17) in dem der Seitenkante (19) gegenüberliegenden Teilbereich des im Wesentlichen horizontal ausgerichteten Bereichs (16) angeordnet ist.

3. Vorrichtung (11) nach Anspruch 2, **dadurch gekennzeichnet, dass** der im Wesentlichen horizontal ausgerichtete Bereich (16) und der angestellte Bereich (17) winklig zueinander angeordnet sind.

4. Vorrichtung (11) nach Anspruch 2 oder 3, **dadurch gekennzeichnet, dass** der im Wesentlichen horizontal ausgerichtete Bereich (16) und der angestellte Bereich (17) in der Gesamtheit eine in etwa gewölbte Kontur aufweisen.

5. Vorrichtung (11) nach einem der Ansprüche 2 bis 4, **dadurch gekennzeichnet, dass** die in Verfahrrichtung (1) weisende vordere Kante (20) des im Wesentlichen horizontalen Bereichs (16) schräg ausgebildet ist.

6. Vorrichtung (11) nach einem der Ansprüche 2 bis 5, **dadurch gekennzeichnet, dass** die vordere Kante (21) des angestellten Bereichs (17) schräg ausgebildet ist.

7. Vorrichtung (11) nach einem der Ansprüche 1 bis 6, **dadurch gekennzeichnet, dass** zumindest eine Abstandseinhalteeinrichtung zum Einhalten eines Abstandes zum Untergrund (35) vorgesehen ist.

8. Vorrichtung (11) nach Anspruch 7, **dadurch gekennzeichnet, dass** zumindest eine Abstandseinhalteeinrichtung als eine skiartig ausgebildete, im Bereich der vorderen Kante (20) der Vorrichtung (11) angeordnete, vorzugsweise mit der Seitenkante (19) fluchtende, Kufe (22) ausgebildet ist.

9. Vorrichtung (11) nach Anspruch 8, **dadurch gekennzeichnet, dass** die Kufe (22) aus einem federnden Material, wie z.B. einem Federstahl, besteht.

10. Vorrichtung nach einem der Ansprüche 1 bis 9, **dadurch gekennzeichnet, dass** als Schneideinrichtung (24) ein horizontal ausgerichtetes rotierendes Schneide- oder Sägeblatt (25) vorgesehen ist.

11. Vorrichtung (11)nach einem der Ansprüche 2 bis 10, **dadurch gekennzeichnet, dass** zwei Hebeeinrichtungen (12) im Abstand zueinander angeordnet sind, wobei die im Wesentlichen horizontal ausgerichteten Bereiche (16) beider Hebeeinrichtungen (12) voneinander wegweisend angeordnet sind.

12. Vorrichtung (11) nach Anspruch 11, **dadurch gekennzeichnet, dass** die Schneideinrichtungen (24) beider Hebeeinrichtungen (12) über einen gemeinsamen Antrieb (26) antreibbar sind.

13. Arbeitsmaschine zum Abschneiden von niedrigwachsenden, insbesondere mit ihren unteren Blättern einen Untergrund (35) berührenden, Kulturpflanzen (9), wie z.B. Salaten, Endivien oder dergleichen, als Teil eines Erntevorgangs, wobei die Arbeitsmaschine zumindest eine Vorrichtung (11) nach einem der vorhergehenden Ansprüchen umfasst.

14. Arbeitsmaschine nach Anspruch 13, **dadurch gekennzeichnet, dass** zumindest eine Vorrichtung (11) über ein Schwenklager mit der Arbeitsmaschine verbunden ist.

15. Arbeitsmaschine nach Anspruch 13 oder 14, **dadurch gekennzeichnet, dass** zumindest eine Vorrichtung (11) über ein Kugelgelenk (14) mit der Arbeitsmaschine verbunden ist.

16. Arbeitsmaschine nach Anspruch 14 oder 15, **dadurch gekennzeichnet, dass** zumindest ein Schwenklager und/oder ein Kugelgelenk (14) in der Höhe bezogen auf den Untergrund (35) verlagerbar ist.
